# EUROPEAN PATENT APPLICATION

(11) **EP 2 355 277 A2**
(43) Date of publication of application: **10.08.2011**
(21) Application number: 10195778.5
(22) Date of filing: 17.12.2010
(51) Int. Cl.: H02B 1/38

(54) **Improved cabinet for electrical/electronic components**

(30) Priority: 28.01.2010 IT PN20100001 U
(71) Applicant: Hager-Lumetal S.p.A., 33080 Porcia, Pordenone (IT)
(72) Inventor: Castria, Franco, 33080, PRATA (Pordenone) (IT); Del Santo, Roberto, 33080, ROVEREDO IN PIANO (Pordenone) (IT)
(74) Representative: Giugni, Diego

(57) **Abstract**

The present invention refers to a cabinet for electrical/electronic components comprising a support structure (1, 18) closed by at least one door (10) connected to said structure by means of hinges comprising first hinge elements (5, 15) integral with said structure (1, 18) and second hinge elements (11) integral with said door (10), **characterized in that** said first hinge elements (5, 15) are located on at least one longitudinal edge of said structure and along its entire length with a modular pitch such as to define a plurality of fastening points of said second hinge elements (11) so as to allow the installation of doors of different sizes.

## Description

### TECHNICAL FIELD OF INVENTION

The present invention refers to an improved cabinet for electrical/electronic components. In particular, it refers to a cabinet on which can be mounted doors or hatches of different sizes in a simple and efficient manner to allow the differentiated access to the respective electrical/electronic components.

### BACKGROUND OF THE INVENTION

In general, a cabinet for electrical/electronic components consists of a rigid, usually metallic structure, generally of box-like shape, provided with four upright elements suitable to support four corresponding vertical walls, a bottom wall and a top wall. At least one of said walls is hinged to one of said uprights so as to create an access door to the inside of the cabinet. Usually, this door is connected to an upright by means of a hinge of known type.

In particular, said hinges include first hinge elements fastened at various points along an upright and second hinge elements fastened at various points in proximity of an edge of a door and suitable to functionally couple with said first elements. The number and position of said hinge elements along the uprights and the doors depends on the weight and size of the door. In fact, the cabinet can be provided with long doors so as to cover completely the height of an upright or with shorter doors to cover only portions of the length of an upright, thus subdividing the cabinet into more compartments accessible selectively and separately. This arrangement is necessary and useful in the case in which the volume of the cabinet is subdivided into multiple compartments suitable to contain equipment of different sizes with the possibility of accessing some of them separately.

It is evident that when assembling the cabinet it is first necessary to define the position of the hinges, and then the first and the second elements must be fastened respectively on the uprights and on the doors in a precise manner, based in every case on the size of the doors for differentiated access to the components inside the cabinet. Although these are routine operations, they can still be laborious. Moreover, in the case of changing the order of installation or the dimensions of the doors it is necessary to remove and reposition the hinges. Further, to allow the installation of more than one door it is necessary to provide at least two hinges for each door that the installer is required to apply.

### SUMMARY OF THE INVENTION

The technical problem at the basis of the present invention is therefore to devise a cabinet for electrical/electronic components comprising structural elements of types that facilitate the installation of doors of different sizes to allow the differentiated access to said components. A further problem is to facilitate the repositioning of the doors, if and when necessary.

This problem is solved by a cabinet for electrical/electronic components provided with hinge elements structured and positioned on the parts of the cabinet in a manner that resolves said problems.

### BRIEF DESCRIPTION OF THE FIGURES

The objective of the present invention is thus to provide a cabinet for electrical/electronic components as covered by the accompanying claims.

Further characteristics and advantages of the present invention will become more evident from the following description of some embodiments given by way of non-limiting example with reference to the enclosed figures, wherein:
- Figure 1A is an axonometric view of a support structure of a cabinet according to the invention;
- Figure 1B illustrates an enlarged detail of Figure 1 A;
- Figure 1C is a cross-sectional plan view along line I-I of Figure 1 A;
- Figure 1D is a plan view of an upright of the support structure of Figure 1 A;
- Figure 2A is an axonometric view of a cabinet partially assembled according to the invention;
- Figure 2B illustrates an enlarged detail of Figure 2A;
- Figure 3 is an axonometric view of a cabinet partially assembled according to a first variant embodiment of the invention;
- Figure 4A is an axonometric view of a hinge element of the cabinet of the invention according to a second variant embodiment;
- Figure 4B illustrates a detail of Figure 4A;
- Figure 5A is an axonometric view of a third variant embodiment;
- Figure 5B is a cross section along line V-V of Figure 5A;
- Figure 5C is an enlarged detail of Figure 5B.

### DETAILED DESCRIPTION OF THE INVENTION

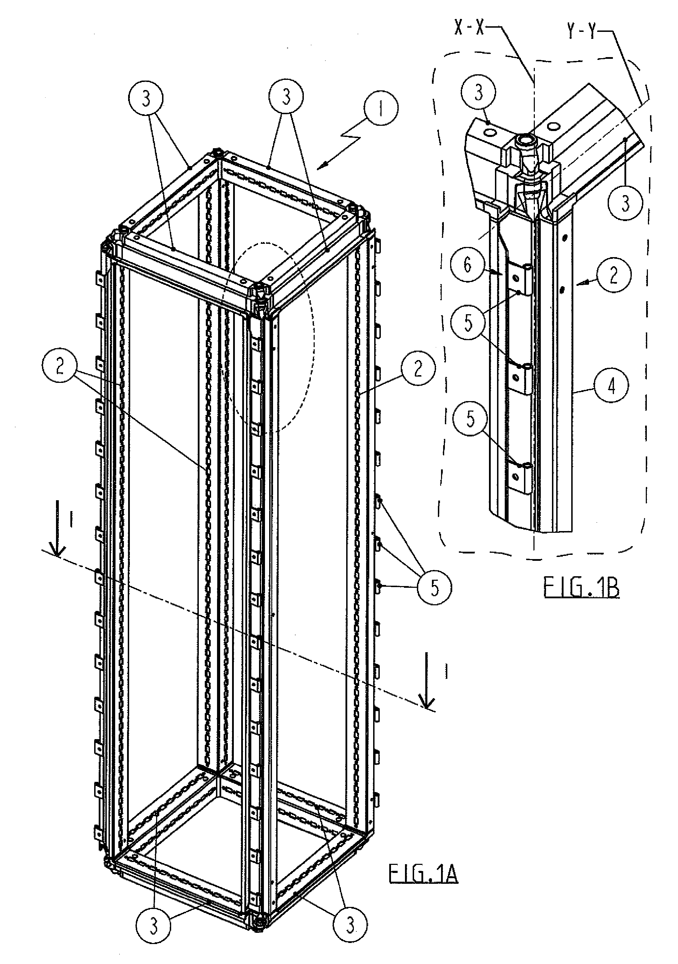

With reference to Figures 1A, 2A and 3, reference numeral 1 indicates a support structure of a cabinet for electrical/electronic components. The support structure 1 includes basically four vertical and parallel uprights 2 joined to each other at their respective ends by means of four cross members 3 so as to form a parallelepiped. Preferably, the parallelepiped has a quadrangular base. Further, the uprights 2 and the cross members 3 are generally of metallic material and have a conventional substantially rectilinear structure along respective axes X-X and Y-Y.

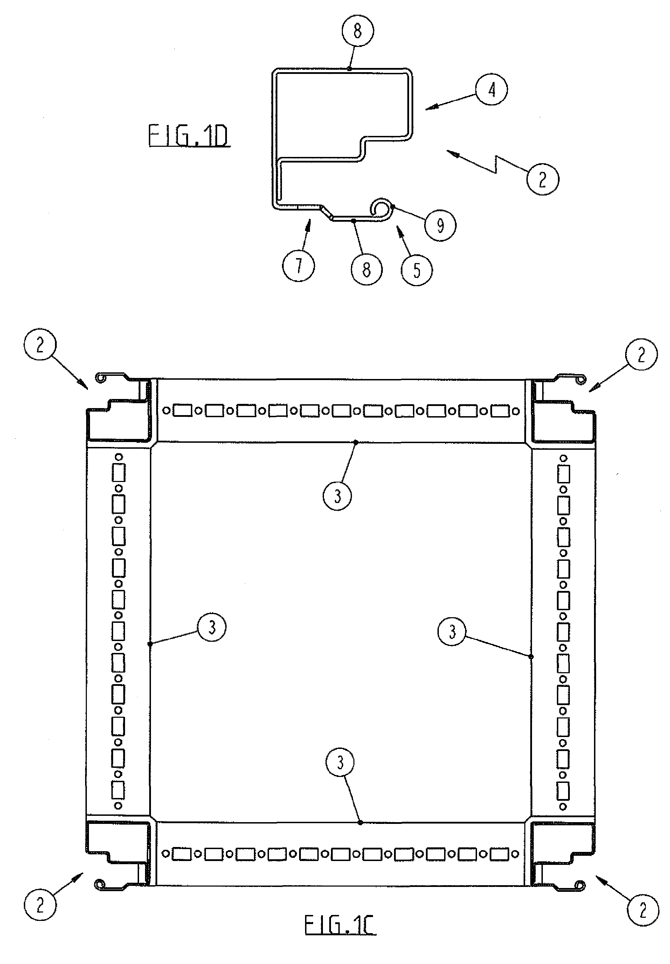

In particular, the uprights 2 include a main body 4 from which extend first hinge elements 5 integral therewith. As is better shown in Figures 1C and 1D, the uprights may be made up of a steel strip 6 folded around its longitudinal axis X-X so as to form the hollow and preferably closed body 4 and the first hinge elements 5 positioned at a certain distance from said body through the interposition of a longitudinal connecting portion 7 of said steel strip. Preferably, said portion 7 has an S-shaped profile.

The first hinge elements 5 are a sort of appendix of the body 4 in the shape of a tang comprising a leg 8 and a ring 9.

Advantageously, the first hinge elements 5 are distributed along the entire length of the upright at a modular pitch defining multiple fastening points for doors of different sizes. In other words, the first hinge elements 5 are regularly spaced so as to allow all the possible combinations of assembling conventionally sized doors. Preferably, the modular pitch is 25 mm.

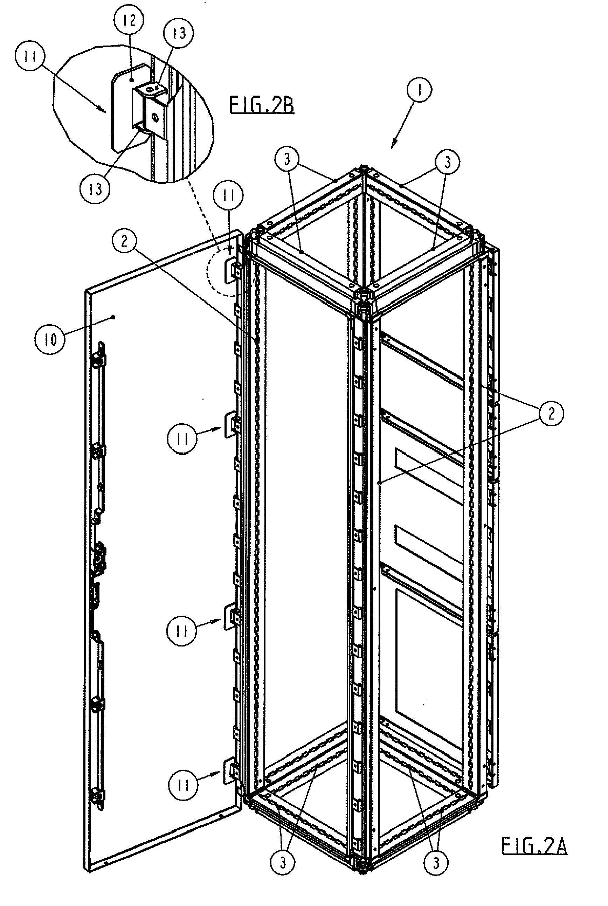

In particular, with reference to Figure 2A, the support structure 1 of a cabinet for electrical/electronic components includes a door 10 of appropriate dimensions to close completely one face of the cabinet. The door 10 is provided with two or more second hinge elements 11 suitable to couple with corresponding first hinge elements 5 formed integrally on an upright 2 of said cabinet.

The second hinge elements 11, as shown in Figure 2B, are represented by conventional plates 12 fastened to the door or formed directly from the edge of the door 10 and comprising two perforated wings 13, substantially perpendicular to the plane defined by the plates 12 and separated in parallel to each other so as to hold between them the above-mentioned first hinge elements 5.

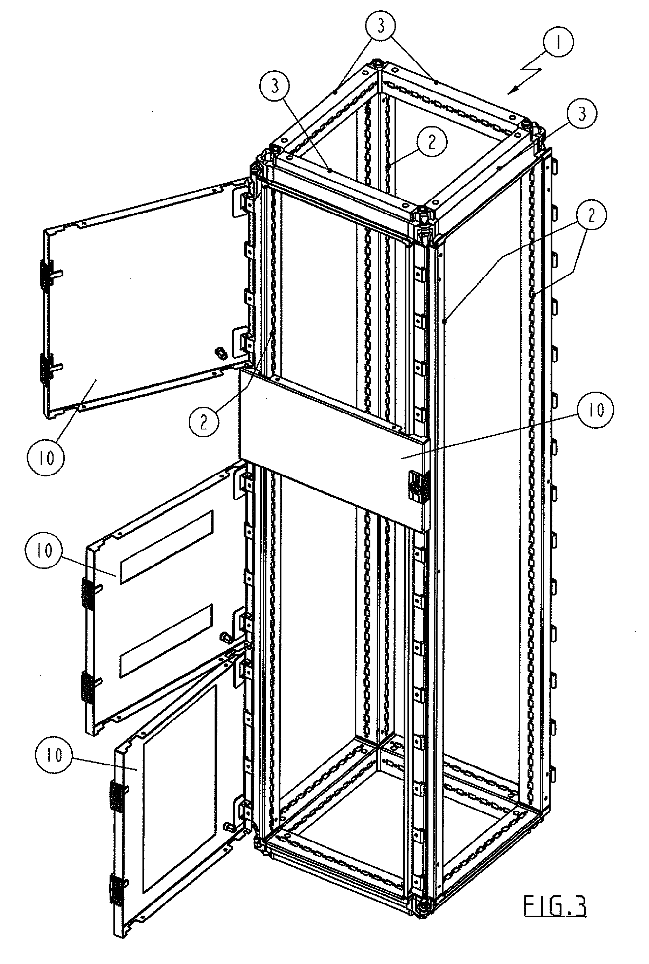

In Figure 3 is illustrated a support structure 1 identical to the support structure of Figure 1A and 2A on which are installed doors 10 of different sizes. In fact, it is possible to rapidly and easily install a plurality of doors even of different standard dimensions exactly because a series of first hinge elements 5 integral with the uprights 2 are already prearranged thereon at predetermined pitches. In other words, there are already in place precise reference points on which the doors can be fastened. In this manner, the cabinet has a connotation of modularity that is a very useful if wishing to position the internal space of the cabinet in a way that is selectively accessible without having to install the first hinge elements 5 each time.

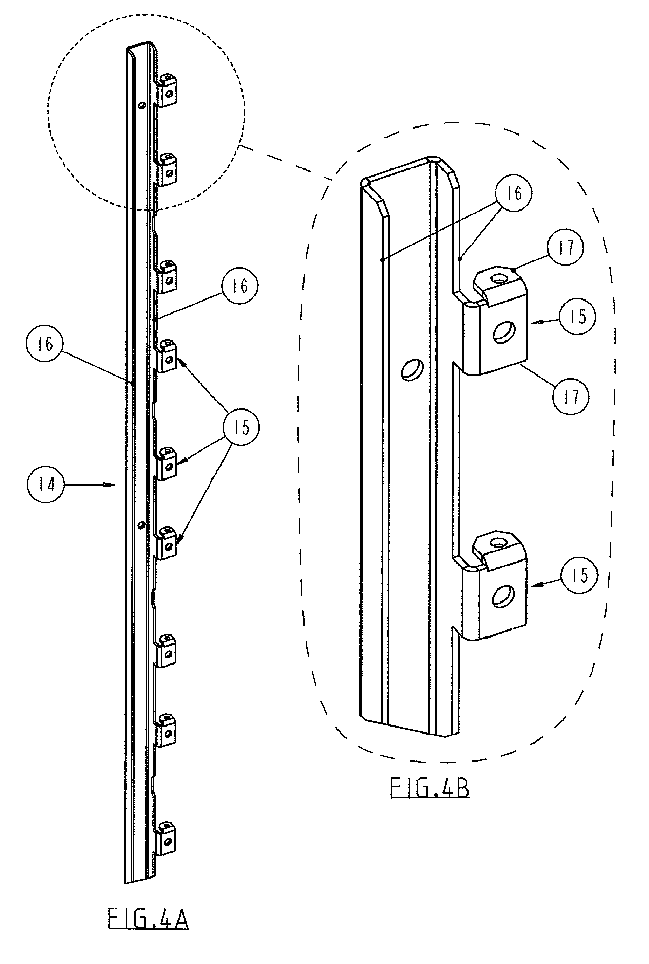

In accordance with one embodiment, Figure 4A illustrates a longitudinal section bar 14 applicable to the uprights 2 and provided with a series of first hinge elements 15. In particular, the section bar 14 has a preferably C-shaped cross section, to reinforce its structure, in which one of the two longitudinal edges 16 holds integral therewith the first hinge elements 15.

Preferably, the first hinge elements 15 are generally L-shaped and are provided with two perforated wings 17 similar to the wings 13 of the second hinge elements 11 previously described. In this case, obviously, second hinge elements (not shown) will be provided on the doors and will have a ring (not shown), similar to the ring 9 described with reference to Figure 1D, suitable to couple with the perforated wings 17 in the same manner described with reference to Figure 2B.

It should be noted, however, that the choice of forming first and second ring-shaped hinge elements instead of wings on the door or on the upright depends simply on the convenience of construction. In other words, the first hinge elements 5 and the second ones 15 can be ring-shaped in the former case and wing-shaped in the latter case, and vice versa, or they could both be ring-shaped or wing-shaped.

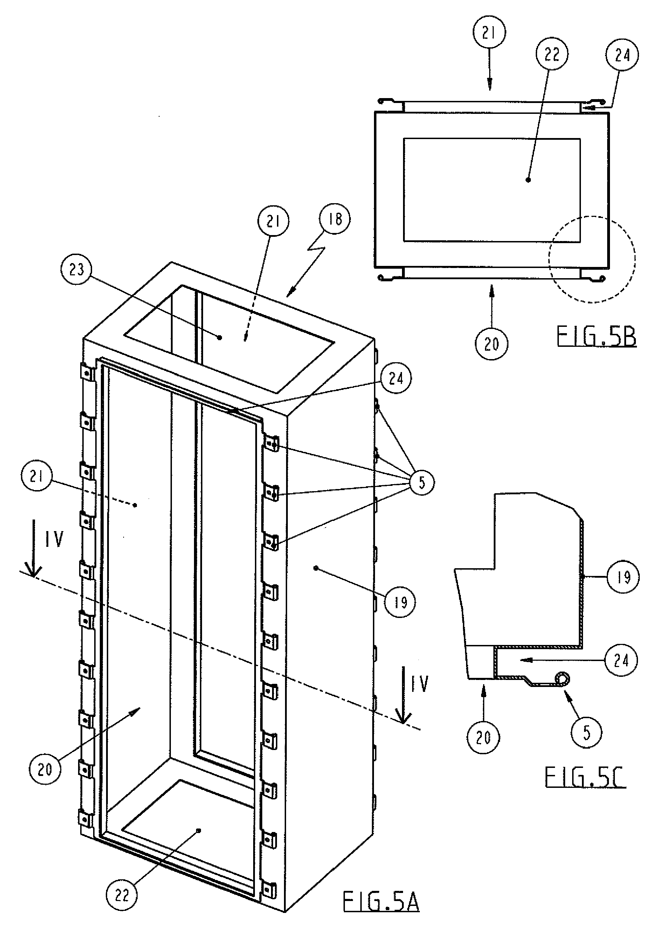

In accordance with a further variant embodiment, as shown in Figure 5A, said first hinge elements 5 can also be formed directly from the side of a cabinet. In particular, a cabinet may be comprised of a single main body or block 18 shaped as a parallelepiped with two closed sides 19, one front wall 20 and one back wall 21, both open, a bottom 22 and a ceiling 23, both open. An integral edge 24, provided with said first elements 5 (figure 5B and 5C), projects outward from the profile of the openings of each front wall 20 and back wall 21. The first elements 5 are in all ways similar to those described with reference to Figure 1D. In addition, as previously, these elements may be in the form of wings like those described with reference to Figure 2B or 4B. Furthermore, the bottom 22, the ceiling 23 and/or one of the two walls, front and back 20 and 22, may be closed.

From the description to this point, it is evident that the problems stated in the introductory part of the present specification have been resolved, and useful advantages have been achieved.

In the first place, the first hinge elements 5, 15 are distributed with an appropriate pitch integral with a section bar to apply to an upright of a cabinet or are integral with the upright itself in such a manner as to form the first modular hinge elements.

The main advantage comes from the fact that it is no longer necessary to mount such hinge elements in predetermined positions depending on the size of the door to install on the cabinet. In fact, the first elements are already prearranged and all that is needed is to use the desired ones.

In the second place, this prearrangement makes it possible to modulate the doors on the cabinet in a quick and simple manner.

The advantage of modularity is to be able to access selectively some internal spaces, and therefore the relative equipment, without the risk of interfering negatively with other equipment.

Moreover, obviously, all the operations of installing the doors, even of different dimensions, and their subsequent change of position are considerably facilitated.

Further variants of the cabinet for electrical/electronic components according to the present invention may be envisaged by a person skilled in the art without departing from the scope of protection of the following claims.

For example, shapes and materials of the uprights, cross members, doors and hinges may be modified according to particular requirements or preferences. The four uprights may be substituted with two structural sides, with the hinges 5 or alternatively the section bars 14 integrated therewith.

## Claims

1. Cabinet for electrical/electronic components comprising a support structure (1, 18) closed by at least one door (10) connected to said structure by means of hinges comprising first hinge elements (5, 15) integral with said structure (1, 18) and second hinge elements (11) integral with said door (10), **characterized in that** said first hinge elements (5, 15) are distributed on at least one longitudinal edge of said structure and along all its length at a modular pitch such as to define a plurality of fastening points for said second hinge elements (11) so as to allow the installation of doors of different sizes.

2. Cabinet according to claim 1, wherein said structure (1) comprises a plurality of vertical and parallel upright elements (2) joined to each other at their respective ends by means of cross members (3), said uprights (2) including a main body (4) from which extend said first hinge elements (5) integral therewith.

3. Cabinet according to claim 2, wherein said uprights (2) comprise a steel strip (7) bent around its longitudinal axis (X-X) so as to form said hollow body (4) and said first hinge elements (5) positioned at a certain distance from said body through the interposition of a longitudinal connecting portion (6) of said strip.

4. Cabinet according to claim 1, comprising a longitudinal section bar (14) applicable to a plurality of uprights (2) and provided with a series of said first hinge elements (15).

5. Cabinet according to claim 4, wherein said section bar (14) has a "C" cross section in which one of the two longitudinal edges (16) carries integrated therewith said first hinge elements (15).

6. Cabinet according to claim 1, wherein said first hinge elements (5) are formed directly from at least one side (19) of said cabinet.

7. Cabinet according to claim 6, comprising a single parallelepiped-shaped main body or block (18) with two closed sides (19) and a front open wall (20) and a back open wall (21), an edge (24) integral with at least one of said front and back walls and projecting outwardly therefrom and provided with said first elements (5).

8. Cabinet according to any one of claims 1 to 7, wherein said first (5) and second hinge elements (15) are the former ring-shaped (9) and the latter with perforated wings (13, 17), and vice versa, or both are ring-shaped or wing-shaped.
